# FASCICULE DE BREVET EUROPEEN

(11) **EP 2 188 138 B1**
(45) Date de publication et mention de la délivrance du brevet: **23.10.2013**
(21) Numéro de dépôt: 08775249.9
(22) Date de dépôt: 21.07.2008
(51) Int. Cl.: B60C 23/04

(54) **PNEUMATIQUE EQUIPE POUR LA FIXATION D'UN OBJET A SA PAROI ET ATTACHE A CET EFFET**
REIFEN AUSGESTATTET MIT EINER OBJEKTFIXIERUNG AN SEINER WAND UND DIE ENTSPRECHENDE FIXIERUNGSVORRICHTUNG
TYRE EQUIPPED FOR ATTACHING AN OBJECT TO THE WALL THEREOF AND FASTENER THEREFOR

(30) Priorité: 24.07.2007 FR 0705384
(43) Date de publication de la demande: 26.05.2010
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: ADAMSON, John David, Greenville, SC 29605 (US); BATTOCCHIO, Claudio, Riom 63200 (FR); BOROT, Martine, F-63118 Cebazat (FR)
(74) Mandataire: Dequire, Philippe Jean-Marie Denis
(86) Numéro de dépôt international: PCT/EP2008/059523
(87) Numéro de publication internationale: WO 2009/013267

(56) Documents cités:
- EP-A- 1 070 580
- WO-A-03/070496
- US-A1- 2005 076 992

## Description

### DOMAINE DE L'INVENTION

La présente invention est relative aux pneumatiques pour roues de véhicules. Elle concerne particulièrement la fixation aux pneumatiques d'objets fonctionnels associés. De tels objets peuvent être des capteurs, des circuits d'identification, et/ou des organes propres à communiquer avec l'environnement du pneumatique, à suivre son fonctionnement et l'évolution de ses caractéristiques physiques ou à fournir des alarmes, toutes fonctions plus ou moins élaborées destinées à offrir au marché des pneumatiques dits intelligents.

### ETAT DE LA TECHNIQUE

L'un des principaux problèmes à résoudre est celui de l'installation et du maintien des objets dans le pneumatique pendant des périodes parfois très longues, pouvant même courir pendant toute la durée de vie du pneumatique, et cela dans des conditions qui préservent l'intégrité physique et fonctionnelle du pneumatique et de ces objets dans un environnement particulièrement sévère, qu'il s'agisse des périodes de roulage ou de repos du véhicule du pneumatique ainsi équipé.

Pour éviter de devoir mettre en place un circuit électronique en cours de fabrication du pneumatique et de lui faire supporter en conséquence les contraintes liées à la conformation de l'ébauche et à sa cuisson, il a déjà été proposé, par exemple dans le document EP 1070580 de mettre en place sur la paroi la paroi interne de l'enveloppe avant cuisson une languette d'adhésif protégée par une pellicule de matériau anticollant. Après la cuisson on enlève cette pellicule et on fixe une face du boîtier d'un circuit électronique sur la languette d'adhésif ainsi dégagée. La languette permet d'espacer le boîtier par rapport à la paroi du pneumatique et grâce à sa flexibilité elle est capable de résister aux efforts de cisaillement lors de la déformation du pneumatique en fonctionnement.

Le document WO 03/070496, dont les termes des préambules des revendications indépendantes 1, 14 et 15 sont inspirés, présente une autre solution dans laquelle la paroi interne du pneumatique est revêtue avant cuisson d'une languette de matériau dont la surface est garnie de boucles, formant une pièce d'une attache auto agrippante du type à boucles et crochets. L'autre pièce de cette attache est garnie de crochets qui sont capables de s'engager dans les boucles de la première pièce lorsqu'on rapproche les deux pièces l'une contre l'autre, après la cuisson du pneumatique et avant de le monter sur une jante de roue. Sur la face opposée aux crochets de cette deuxième pièce est fixé l'objet à installer à l'intérieur de la cavité du pneu. Selon une variante du document précité, l'objet peut être pris en sandwich entre les faces revêtues de boucles et de crochets des deux pièces pour le retenir dans la position choisie de la paroi interne.-Cette solution, qui fait appel à une technique connue depuis longtemps pour réaliser la fixation amovible d'un objet sur un pneumatique, par exemple par le brevet US 3,260,294, présente l'avantage de permettre de récupérer l'objet à tout moment quand le pneu est démonté, soit pour le remplacer, soit pour le réutiliser en fin de vie du pneu, ou encore pour exploiter certaines données le concernant.

Les solutions précédentes souffrent cependant toutes deux du fait que la première pièce de l'attache, adhésive ou auto agrippante, intégrée à la paroi du pneumatique en cours de fabrication, est de nature à entraver les déformations de cette paroi sous l'action des sollicitations dont elle est l'objet dans deux cas. Il s'agit dans le premier cas de la fabrication du pneu, notamment lorsque cette dernière comporte une ou plusieurs étapes impliquant une conformation de l'enveloppe. Le deuxième cas est celui du fonctionnement du pneumatique en roulage. On se souvient en effet que la paroi de l'enveloppe se déforme cycliquement à chaque tour de roue. En outre elle est sujette à des déformations qui peuvent être substantielles pour encaisser tous les efforts et les chocs consécutifs aux déplacements de la roue sur des chaussées inégales, voire garnies d'obstacles, tels que nids de poule, cailloux, bordures, etc.

### BREVE DESCRIPTION DE L'INVENTION

Au regard de ces difficultés, l'invention vise à réaliser la fixation d'un objet dans un pneumatique à l'aide d'une attache en deux parties, dont l'une est solidaire de la paroi du pneumatique, d'une manière qui perturbe le moins possible le pneumatique destiné à le recevoir, dans son fonctionnement et le cas échéant dans sa fabrication.

Conformément à cet objectif, un pneumatique selon un aspect de l'invention comprend une enveloppe dont la paroi est propre à supporter une pression de service interne après que l'enveloppe a été montée sur une roue de véhicule et une attache auto agrippante pour fixer un objet à cette paroi, cette attache comprenant une première partie solidaire de la paroi et capable de se déformer avec elle, une deuxième partie propre à être couplée mécaniquement avec la première partie par des éléments de liaison lorsqu'elle est appliquée contre elle, de façon à maintenir l'objet en position de service sur la paroi du pneumatique. Le pneumatique est caractérisé en ce que :
- la caractéristique de déformabilité propre de la première partie d'attache est telle que les contraintes développées dans cette attache par les déformations qu'elle subit au contact de ladite paroi soient sensiblement inférieures aux contraintes qui provoquent lesdites déformations dans la paroi de l'enveloppe,
- en sorte que la présence de cette première partie d'attache n'entrave pas sensiblement les déformations de la paroi, et
- qu'en position de couplage lesdits éléments de liaison laissent (ou ménagent) une faculté de débattement mécanique entre la première et la deuxième partie d'attache qui limite la transmission desdites sollicitations à la deuxième partie de l'attache et à l'objet dans sa position de service.

Grâce à ces dispositions on peut réaliser la fixation de l'objet, de manière amovible ou non, en un emplacement interne ou externe de la paroi qui a été préalablement préparé à cet effet, avant son montage sur une jante dans le cas où l'objet est fixé à l'intérieur de la cavité du pneumatique.

Le système d'attache proposé préserve le secteur de la paroi d'enveloppe à laquelle est fixé l'objet en permettant notamment à celle-ci de se déformer selon son mode normal de fonctionnement, et notamment de s'étirer, sans contrainte excessive ni fatigue.. En particulier, lorsque la paroi du pneumatique est sollicitée en tension à l'endroit ou est fixée l'attache, elle s'étire en transmettant à son interface avec ladite attache des efforts de cisaillement qui entraînent une extension de celle-ci et accompagnent son retour à l'état initial lorsque la contrainte de tension disparaît. Selon cet aspect de l'invention les caractéristiques de déformabilité de ladite attache sont telles que les déformations d'élongation et de retrait imposées par la paroi pneumatique (sous l'effet de contraintes dans l'enveloppe qui peuvent être importantes) n'engendrent en réaction que des contraintes faibles dans cette paroi. De plus, cet effet est obtenu sans affecter la solidité de la fixation de l'objet car les déformations de la première partie de l'attache sont essentiellement absorbées par la liaison réalisée entre les deux parties. La qualité de l'accrochage des éléments de liaison est maintenue tout au long de l'utilisation et l'objet lui-même se trouve, au moins pour l'essentiel, à l'abri des sollicitations mécaniques qui affectent la paroi à laquelle il est fixé.

La liaison entre la première et la deuxième partie peut être réalisée avantageusement suivant le mode connu des systèmes mécaniques auto agrippants. Les éléments de liaison comprennent des éléments filaires ou filiformes ou tiges flexibles qui relient une face du support mince à une face correspondante de la deuxième partie d'attache. Les caractéristiques physiques ou géométriques de ces éléments, notamment leur longueur, leur inclinaison par rapport à la surface des parties d'attache dont ils dépendent, leur distribution, leur densité sont déterminées pour conférer à la liaison une capacité de débattement tangentiel et/ou radial entre les dites faces adéquate pour éviter ou atténuer la transmission à l'objet attaché des déformations qui affectent la première partie de l'attache sous l'effet des élongations, cisaillements, torsions subis par le pneumatique en roulage.

Dans un mode de réalisation, chacune des première et deuxième parties d'attache est garnie d'éléments de liaison propres à s'accrocher à des éléments de liaison de l'autre partie lorsque les faces correspondantes de ces deux parties sont pressées ou appliquées l'une contre l'autre. Ces éléments de liaison peuvent comporter de façon connue des éléments d'accouplement mâles, tels que crochets, harpons ou champignons, faisant saillie à la surface d'une desdites parties d'attache et des éléments d'accouplement femelle, tels que boucles ou alvéoles, solidaires dans la face correspondante de l'autre partie d'attache. Dans un mode de réalisation préféré, les éléments de liaison de la première partie d'attache sont des boucles de longueur et/ou d'inclinaison réglable émergeant dans une ou des directions transversales par rapport à la surface de la paroi d'enveloppe.

Selon un mode de réalisation, la première partie de l'attache comprend un support mince solidaire de la paroi de l'enveloppe et possédant une capacité d'allongement structurelle au moins égale à l'amplitude maximale de la déformation de l'enveloppe dont elle est solidaire sous l'action des sollicitations dont elle peut être l'objet.

Le support mince peut comporter une nappe, toile ou étoffe, tissée ou non, ou réalisée à l'aide d'une structure à mailles tricotée ou à cote de mailles, ou d'une autre manière. Les fils ou filaments de cette structure forment un substrat auquel sont fixés des éléments de liaison flexibles qui se projettent sur une des faces du support dont l'autre face est destinée à être fixée à l'endroit choisi dans la paroi de l'enveloppe du pneumatique. Alternativement la surface du support peut présenter des lacunes ou alvéoles formant des entrées de cavités à l'intérieur desquelles peuvent s'introduire les extrémités d'éléments de liaison mâles, en forme de crochets, harpons ou champignons issus de la deuxième partie de l'attache auto agrippante pour réaliser un accrochage.

Les éléments filaires qui forment l'étoffe du support mince peuvent être élastiques de façon à conférer au support mince les propriétés requises de déformabilité avec la paroi à laquelle est associée la première partie d'attache. Elles peuvent aussi être assemblées suivant une structure lâche par exemple comme celle d'un tricot ou d'un ouvrage au crochet qui leur confère des possibilités d'extension importantes avec ou sans déformation élastique. A cet égard une structure du type à cote de mailles, constituée par des anneaux, flexibles ou non, attachés les uns aux autres dans deux dimensions pour former une nappe, est également bien adaptée aux besoins. Dans tous ces cas le support ainsi formé peut être enduit d'un côté au moins d'une substance, par exemple caoutchouteux qui confère à la nappe une faculté de rappel élastique en cas de nécessité.

Dans la plupart des applications pneumatiques la capacité d'allongement structurelle du support mince de la première partie d'attache auto agrippante doit être au moins égale à 10 %; pour encaisser les déformations cycliques de la paroi du pneumatique au cours du fonctionnement de l'enveloppe en roulage ; de préférence elle est d'au moins 30 %, pour absorber convenablement les déformations substantielles de l'enveloppe rencontrées par le pneumatique en cours de fonctionnement comme indiqué précédemment, notamment encaisser les déformations accidentelles prévisibles de la paroi du pneumatique au contact d'obstacles rencontrés en roulage.

Dans une forme de réalisation, il peut être avantageux de rendre ladite première partie solidaire de la paroi du pneumatique au cours de sa fabrication, par exemple du côté interne à la cavité. Dans ce cas la capacité structurelle initiale d'allongement du support mince avant l'achèvement de la fabrication (étape de vulcanisation notamment) doit permettre de supporter les déformations, notamment les élongations permanentes, inhérentes à la ou aux différentes phases de conformation de l'ébauche à cru dans sa fabrication (ainsi que pendant sa vulcanisation le cas échéant). Dans le cas où les opérations de conformation sont importantes, on peut être amené à sélectionner pour le support mince un matériau possédant une capacité structurelle d'allongement initiale, c'est à dire avant la ou les opérations de consolidation et de stabilisation finales telles que la vulcanisation, d'au moins 20 % et pouvant même atteindre 100 % pour accompagner les élongations de la paroi tout au long de sa fabrication.

Dans tous les cas, la caractéristique de déformabilité du matériau constituant le support mince (par exemple son module élastique) doit être suffisamment faible pour que ce support n'oppose pas, pendant le fonctionnement, de résistance forte aux efforts d'élongation qui lui sont transmis par la paroi du pneumatique à laquelle il est fixé et, ainsi qu'il n'entrave pas sensiblement à leur interface la déformation de cette dernière sous l'effet des sollicitations qu'elle subit en cours de fonctionnement. On peut ainsi sélectionner pour le support mince un matériau souple dont le module d'élasticité dans la direction principale des déformations de la paroi de l'enveloppe est inférieure à 3,5 MPa à la température ambiante (23°C), et 2,5 MPa à 60°C.

Selon un aspect de mise en oeuvre de l'invention on peut utiliser une attache dont la première partie comporte des éléments de liaison implantés directement dans la paroi du pneumatique et qui se projettent vers l'extérieur de cette paroi dans le secteur concerné. Dans ces conditions, les extrémités des éléments de liaison implantés dans la paroi sont libres de s'écarter ou de se rapprocher les unes des autres lors des déformations de la paroi sans brider aucunement cette dernière. Les caractéristiques physiques et/ou géométriques des fils flexibles qui constituent ces éléments, notamment leur longueur, sont choisis en fonction des performances de découplage mécaniques requises pour maintenir l'objet à l'emplacement choisi tout en le préservant des sollicitations qui affectent la paroi du pneumatique dans les conditions d'environnement particulièrement sévère qui prévalent en roulage, de manière à satisfaire au mieux les conditions de durabilité exigées par l'application.

L'invention a aussi pour objet une attache auto agrippante pour la fixation d'un objet dans un pneumatique caractérisée par le fait qu'elle réalise un découplage mécanique entre une première partie de l'attache destinée à être solidarisée avec la paroi du pneumatique et une deuxième partie qui peut être appliquée contre la première partie pour maintenir l'objet contre la paroi du pneumatique dans une position de service.

L'invention a également pour objet une ébauche de pneumatique en cours de fabrication comportant un support mince possédant les caractéristiques de déformabilité mentionnées précédemment associée aux composants à cru de la paroi pneumatique pour former à l'issue de la fabrication une première partie d'attache auto agrippante solidaire de cette paroi.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente très schématiquement un exemple de réalisation d'une paroi d'un pneumatique équipée selon l'invention d'une attache auto agrippante.

La figure 2a illustre, vue en plan, une réalisation de la partie bouclée d'une telle attache selon les modèles actuellement disponibles et la figure 2b est une vue en coupe selon le plan A de la figure 2a.

La figure 3a montre une variante de réalisation préférée de la pièce de la figure 2a pour la mise en oeuvre de l'invention dans l'exemple choisi et la figure 3b est une vue en coupe selon le plan B de la figure 3a.

Les figures 4A et 4B illustrent un mécanisme de fonctionnement de l'invention lorsque la paroi du pneumatique subit des déformations en cours de fonctionnement.

### DESCRIPTION D'UN OU PLUSIEURS EXEMPLES DE RÉALISATION

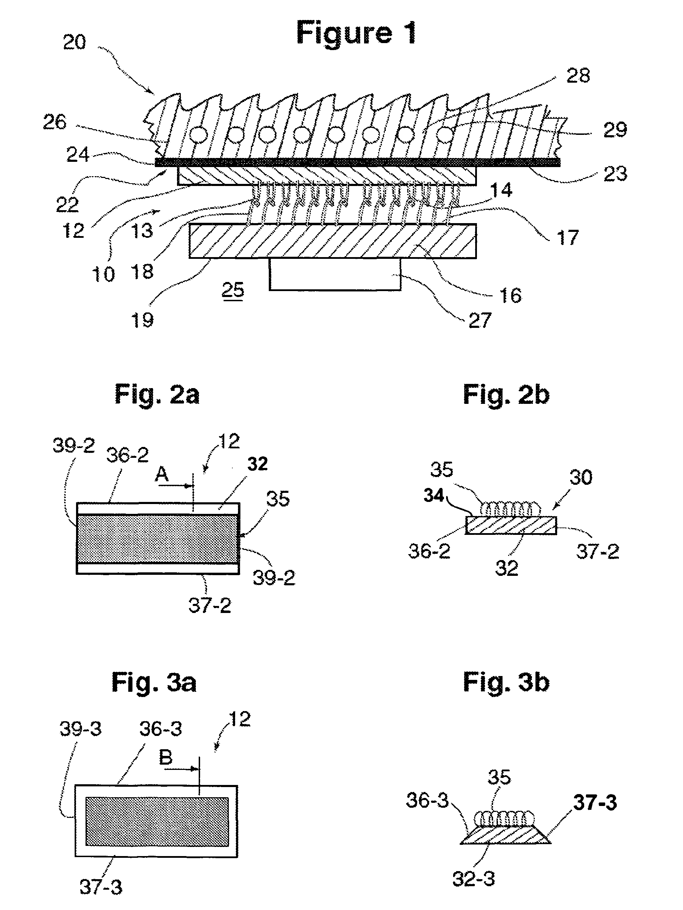

Sur la figure 1, une attache auto agrippante 10 est fixée sur une face interne 23 de la paroi 22 d'une enveloppe pneumatique 20. Dans cet exemple d'un pneumatique sans chambre à air, cette paroi délimite une cavité gonflable. Elle est revêtue d'une couche de gomme intérieure 24, destinée à optimiser son étanchéité au gaz de gonflage. La couche de gomme 24 est déposée sur une ou plusieurs couches de gomme 26 derrière lesquelles est disposée une nappe carcasse 28 dont les câbles de renfort 29 apparaissent en coupe.

L'attache 10 est une fixation auto agrippante constituée en deux parties. Une première partie comprend un support mince et souple, ici sous la forme d'une languette 12 d'un tissu ou tricot industriel possédant une faculté d'élongation élastique dosée dans les directions de son plan, comme il sera expliqué ci-après. Une face de cette languette 12 est ici solidarisée avec la couche de gomme intérieure 24. Dans la face opposée 14 de cette languette sont fixés des éléments d'accrochage femelle tels que des boucles 13 résistantes en fil flexible aramide, polyamide, polyester ou autre. Les boucles 13 qui forment une sorte de fourrure à la surface de la languette 12 sont dirigées vers l'intérieur de la cavité 25 du pneumatique 20 pour permettre à des éléments d'accrochage mâles tels que des crochets de venir s'y fixer comme expliqué ci-après.

La deuxième partie de l'attache 10 est formée par un autre support mince, ou plaquette 16 représentée très schématiquement sur la figure 1 en position accouplée avec la languette 12 de la première partie. Une face 17 de la plaquette 16, tournée vers la paroi interne 22 du pneumatique, est garnie d'éléments d'accrochage mâles tels que des crochets 18, qui se projettent vers l'extérieur à partir de la face 17 de la plaquette 16 et dont au moins un certain nombre sont, dans la position d'accouplement représentée, engagés dans des boucles 13 respectives de la fourrure garnissant la face 14 de la languette bouclée 12. Du côté de l'autre face 19 de la plaquette à crochets, tournée vers l'intérieur de la cavité 25 du pneumatique est fixé un objet fonctionnel, par exemple un circuit électronique 27 encapsulé dans un matériau de protection. Ce circuit peut remplir une ou plusieurs fonctions pour pneumatique intelligent, à savoir tout d'abord une fonction de communication active, ou passive en réponse à une sollicitation électrique, magnétique ou hertzienne. Il peut également remplir des fonctions de mesure dans l'environnement, telles que température et pression, ou des mesures plus opérationnelles concernant des contraintes qui affectent le pneumatique, des paramètres dynamiques tels que des accélérations. Il peut enfin exercer, sans que cette liste soit limitative, des fonctions de surveillance ou d'alarme.

Les crochets 18 sont réalisés ici en acier et implantés dans une toile ou tricot d'aramide constituant la plaquette 16, ces matériaux étant propres à résister convenablement à l'environnement sévère régnant dans la cavité pneumatique, tant en pression qu'en température, et cela pendant des périodes pouvant couvrir plusieurs années.

La languette 12 supportant les boucles 13, et formant le support mince de la première partie de l'attache 10 a subi un traitement d'enduction pour lui donner du collant à cru (tack) qui la maintienne en position solidaire de la paroi 22 pendant la fabrication du pneumatique et une adhésion après cuisson convenable. Conformément à une disposition importante pour la mise en oeuvre de l'invention, la languette 12 est capable de se déformer parallèlement à son plan et notamment de s'allonger en même temps que la paroi du pneumatique à laquelle elle est accolée sans opposer de résistance importante aux élongations de cette paroi au cours du fonctionnement du pneumatique.

On sait qu'au cours de la rotation de la roue, une zone quelconque de la paroi 22 du pneumatique se déforme cycliquement, depuis le moment où le secteur correspondant de la bande de roulement entre dans l'aire de contact du pneumatique avec la surface de roulement jusqu'au moment où elle en ressort, ainsi que dans une moindre mesure pendant tout le reste de la course circulaire de cette zone autour de l'axe de la roue, jusqu'au retour du secteur correspondant de la bande de roulement dans l'aire de contact. Par ailleurs la paroi 22 subit aussi les chocs transmis par les inégalités de la chaussée au contact de laquelle se déplace la roue. C'est le cas, en particulier, quand elle rencontre des obstacles importants tels que ralentisseurs, pierres, nids de poule, bordures diverses, etc. Toutes ces sollicitations se traduisent par des contraintes de traction, de flexion, de compression, de cisaillement et de torsion dans la paroi du pneumatique, qui se transmettent à son interface de liaison avec la languette qui lui est fixée. Il parait souhaitable d'éviter que la présence de la languette 12 n'entrave ou ne bride la capacité de déformation de la portion de paroi 22 du pneumatique à l'interface, sous peine de provoquer la formation de contraintes plus intenses localisées dans des secteurs de la paroi voisins de cette interface, qui peuvent alors se fatiguer excessivement, voire même parvenir à se rompre.

Selon un aspect de l'invention, on prévoit de réaliser le support mince avec une languette 12 dont la capacité d'allongement structurel est au moins égale à celle de la paroi de l'enveloppe pneumatique dans les secteurs considérés. En pratique on choisit pour cette languette 12 un matériau dont la capacité structurelle d'allongement est d'au moins 10% et, de préférence, de 30% au moins pour tenir compte des conditions d'utilisation de certains types de pneumatiques (génie civil par exemple), ou si l'on souhaite disposer d'une marge de sécurité suffisante dans le cas de chaussées sévèrement accidentées. Il est également opportun d'employer un support mince dont le module d'élasticité, ou module élastique, dans la direction des efforts transmis par la paroi pneumatique soit tel que les efforts engendrés dans le support mince en réaction aux déformations qui lui sont imposées à son interface avec la paroi de l'enveloppe soient peu élevés par rapport aux efforts qui en sont la cause dans cette paroi d'enveloppe. A titre d'exemple on peut retenir des valeurs du module d'élasticité en extension à 10% de déformation, de 3,5 MPa à la température ambiante (23°C), et 2,5 MPa à 60°C. Grâce à cette disposition, la paroi de l'enveloppe pneumatique peut notamment se déformer au cours du fonctionnement du pneumatique sans risquer de se voir bridée de manière substantielle par la languette 12 à l'interface.

La toile ou l'étoffe constitutive du support mince des boucles de languette peut être réalisée par tissage, tricotage ou autre technique d'enchevêtrement de fibres en matériaux adaptés aux conditions d'endurance sévères régnant dans un pneumatique et aux caractéristiques d'élasticité requises. Les structures tricotées à partir de fils flexibles peuvent se prêter favorablement à la réalisation de structures possédant une forte capacité d'élongation conférée par la déformation des mailles. A cet égard on peut se référer à l'enseignement du document au nom des demandeurs WO 2006/012942 A1 publié le 9 février 2006. On peut aussi tirer parti des propriétés des structures du type cote de maille comme il a été expliqué plus haut.

Une méthode pour la fixation de la première partie 12 de l'attache 10 à la paroi du pneumatique consiste à déposer la languette 12 sur un tambour de pose avant la gomme intérieure et la nappe carcasse 28 au cours de l'assemblage des composants à cru du pneumatique. Une fois l'assemblage des composants terminé, ou dans certains cas dans une phase intermédiaire, l'ébauche du pneumatique à cru peut subir une ou plusieurs opérations qui impliquent chacune une conformation de l'assemblage pour aboutir à la forme torique bien connue. L'ébauche crue est ensuite placée dans moule à l'intérieur d'une presse de vulcanisation. Elle y est soumise simultanément à une température et une pression propres à réaliser la réaction de vulcanisation des gommes qui leur procure leurs qualités d'élasticité et de résistance propres au caoutchouc vulcanisé. Fréquemment, cette mise en pression s'accompagne d'une opération de conformation supplémentaire dans laquelle les gommes sont repoussées dans des éléments en relief propres à former des motifs (sculptures et marquages notamment) à la surface de l'enveloppe pneumatique et à conférer à l'ébauche son profil définitif.

Dans un mode de fabrication du pneumatique multi conformation tel que celui qui vient d'être évoqué, la languette 12 fixée sur la couche de gomme intérieure qui limite la cavité du pneumatique subit toutes les sollicitations issues des déformations de cette gomme. Il est important qu'elle n'oppose que peu de résistance à ces déformations et que la position de son interface avec cette gomme soit préservée pendant les opérations de fabrication pour ne pas risquer d'affaiblir l'efficacité de la fixation de la languette à l'emplacement prévu dans la paroi du pneu. On peut être alors amené à sélectionner une capacité d'allongement structurelle importante à cru pour le matériau constituant la languette, pouvant aller par exemple jusqu'à 100% dans le cas où le procédé implique plusieurs étapes de déformation successives avant d'aboutir à la forme définitive du produit. Si, en revanche, le procédé de fabrication du pneumatique ne met pas en oeuvre les étapes de conformation en fabrication multiples et importantes on pourra se contenter d'une capacité structurelle d'allongement à cru moindre pour la languette.

On peut aussi associer la languette 12 de support des boucles à l'enveloppe pneumatique en cours de fabrication juste avant vulcanisation par exemple dans une presse de cuisson équipée d'une membrane qui vient s'appliquer à l'intérieur de la paroi de cette enveloppe. Dans ce cas une capacité structurelle d'élongation très élevée à cru de la languette n'est pas nécessaire. Bien entendu le matériau constitutif des boucles est adapté à résister à la pression et la température de la membrane pendant la vulcanisation pour qu'elles conservent ou acquièrent, à l'issue de l'opération, les caractéristiques mécaniques nécessaires à l'accrochage avec les éléments de liaison de la deuxième partie d'attache 10.

La figure 2a illustre une languette 12 réalisée à partir d'un support d'attache conforme à des réalisations commercialement disponibles actuellement. Cette languette est obtenue par découpage à la longueur convenable d'un ruban 30 qui comporte un support mince 32 (en matériau formé par un tissu ou autre étoffe enduits en fil technique végétal ou synthétique), revêtu sur une de ses faces 34 d'une fourrure de boucles de fil aramide 35 ou autre matériau comme il a été dit. Comme on peut l'observer dans la coupe de la figure 2b, les bords longitudinaux 36-2 et 37-2 de la face 34 dépourvus de fourrure sont lisses et rendus relativement raides par l'enduisage des fibres du support ou dossier 32, ce qui rend ces bords abrasifs ou coupants au risque d'endommager la gomme avoisinante. Les extrémités transversales 39-2 de la languette 12, qui résultent de la découpe du ruban 30, ne possèdent pas de rebord lisse. Ils présentent cependant aussi le défaut d'être abrasifs au risque, le temps passant, de couper la gomme sur laquelle ils sont collés.

La figure 3a illustre la réalisation d'une languette qui pallie ces difficultés grâce à des bords d'extrémités transversales 39-3 de la languette dépourvus de fourrure de façon à ménager une bordure lisse tout autour de la languette 12. En outre les profils des rebords 36-3, 37-3 et 39-3 sont biseautés pour venir "mourir" au contact de la gomme sous-jacente, tout autour de la languette 12, de façon à donner à ces rebords une souplesse croissante en allant de la zone de la languette garnie avec boucles vers sa périphérie.

Ainsi lorsque l'enveloppe du pneumatique a été équipée en cours de fabrication d'une première partie d'attache auto agrippante comme il a été dit, il suffit, soit avant l'expédition du pneumatique depuis le lieu de fabrication, soit au moment de son montage sur une jante, de lui associer l'objet fonctionnel désiré en fonction des applications prévues pour ce pneu. L'assemblage est fait par application et pression directe de la plaquette 16 de la deuxième partie d'attache 10, avec son circuit 27, sur la première partie pour provoquer l'engagement des crochets ou harpons 18 de la deuxième partie dans les boucles 13 du support mince 12 de la première partie. Cette opération peut-être réalisée manuellement ou mécaniquement, en particulier, dans ce dernier cas, si une pression d'application élevée et/ou convenablement dosée est requise à cet effet, par exemple avec des éléments d'accrochage relativement rigides. A titre indicatif, on a déterminé que la résistance aux efforts auxquels est soumis l'objet pouvait atteindre 10 N/cm². Ce critère offre une bonne sécurité vis-à-vis des efforts d'arrachement subis en fonctionnement (notamment à raison de la force centrifuge) par l'objet et la deuxième partie de l'attache auto agrippante, soit perpendiculairement à la paroi du pneu, soit en cisaillement, en fonction de l'emplacement de la paroi où l'attache est positionnée.

A cet égard, la fixation ici évoquée peut être réalisée directement dans le sommet de la paroi du pneu, sous la bande de roulement. Dans ce cas, la force centrifuge agit en compression dans le sens d'un rapprochement des deux parties 12 et 16 de l'attache 10 l'une contre l'autre. D'autres sollicitations qui peuvent être importantes en cisaillement ou en arrachement résultent des efforts cycliques subis par le sommet du pneumatique en roulement ainsi que des contraintes transmises par les inégalités de la chaussée et des chocs d'obstacles, comme il a été expliqué plus haut. L'objet 27 peut également être fixé dans le flanc du pneu, à l'extérieur ou, plus fréquemment, à l'intérieur. Dans cette position, l'attache doit alors résister aux efforts de cisaillement résultant de la force centrifuge et des autres contraintes qui se développent dans la paroi du pneu. L'objet peut enfin être localisé dans ou près de la zone basse.

Les attaches auto agrippantes industrielles courantes réalisent un serrage très efficace et ne laissent en général guère de jeu mécanique entre les deux parties de l'attache. Ainsi, les efforts qui affectent l'enveloppe sont quasi intégralement transmis à l'objet. Si aucune précaution n'était prise, la rigidité de l'objet risquerait d'empêcher les déformations du support mince 12 constitutif de la première partie de l'attache et par là même de brider la capacité de déformation de la paroi d'enveloppe à laquelle il est attaché, contrairement à l'objectif exposé plus haut. L'objet lui-même devrait supporter une grande partie des efforts de cisaillement qui sont transmis par la paroi à l'interface avec l'attache, ce dont devraient tenir compte la construction et l'encapsulation de l'objet. Suivant une caractéristique avantageuse de l'invention, on s'est rendu compte qu'on pouvait obtenir un découplage mécanique entre la première partie de l'attache et la seconde, en jouant sur certaines caractéristiques telles que la longueur et la souplesse ou la flexibilité des éléments de liaison entre ces deux parties, voire, le cas échéant, leurs caractéristiques d'élasticité propre. On parvient ainsi à assurer à la fois une protection convenable de la paroi de l'enveloppe à l'interface et la préservation de l'objet 27 contre la transmission des efforts déployés dans cette paroi.

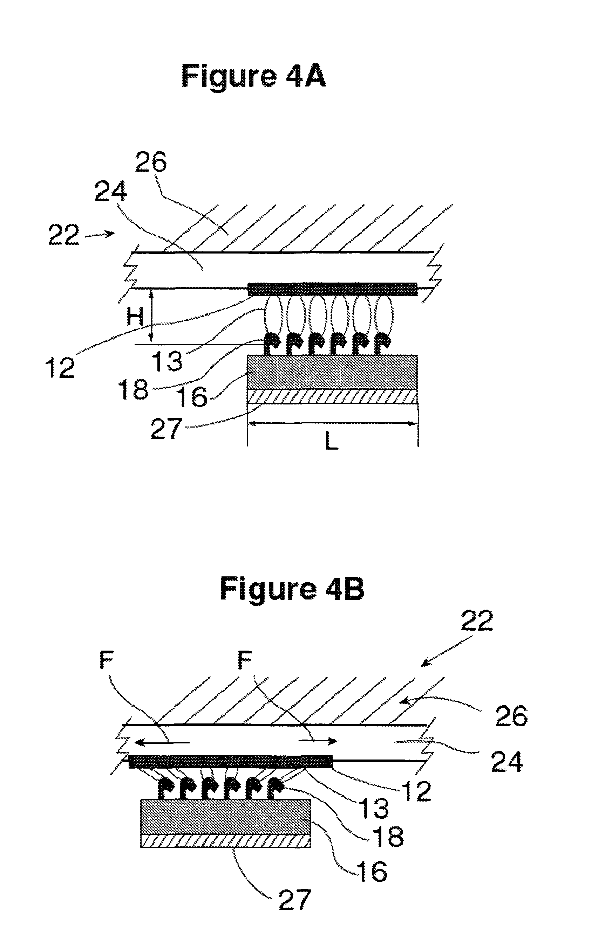

Les figures 4A et 4B illustrent ce mécanisme de découplage à l'aide d'une coupe de la paroi de l'enveloppe par un plan parallèle à une direction principale de déformation de cette paroi. Les boucles 13 de l'attache 10 ont une extrémité prise dans la languette de support 12 fixée à la paroi 22. Du côté de leurs extrémités opposées elles sont engagées par les crochets 18 solidaires de la plaquette 16 portant l'objet 27 dont la longueur dans la direction principale de déformation mentionnée est désignée par L. Dans la figure 4A, la paroi 22 du pneumatique revêtue de la couche de gomme intérieure 24 est en équilibre statique à un instant donné entre la pression de gonflage et les forces de réaction développées par l'enveloppe pneumatique à raison de sa structure. Les boucles 13 ont une hauteur H suffisante pour ménager entre la languette 12 et la plaquette 16 un jeu (faculté de débattement) radial et tangentiel dont la représentation est volontairement exagérée à la figure 4A.

La figure 4B représente la situation lorsque la paroi 22 subit en cours de roulage une sollicitation pour l'une des causes mentionnées précédemment, qui se traduit par une élongation, illustrée par les flèches F, transmise à la languette qui s'étire également sans opposer de résistance élevée pour les raisons exposées précédemment. Comme le montrent schématiquement la figure 4B, les pieds des boucles implantées à cet endroit s'écartent. Du fait de leur hauteur suffisante, l'écartement des pieds est compensé par l'inclinaison des boucles et une diminution corrélative de la distance entre la languette 12 et la plaquette 16, sans que les efforts de traction qui affectent la languette 12 ne soient transmis via les crochets 18 à la plaquette 16 ni à l'objet 27.

Les objectifs énoncés précédemment peuvent donc être atteints grâce au réglage de la hauteur des boucles (on pourrait également agir sur la longueur des crochets) en fonction de la longueur de la plaquette 16 portant l'objet 27. Ainsi par exemple avec une plaquette de longueur L égale à 50 millimètres et une hauteur H de boucle de 5 millimètres, la paroi du pneumatique peut subir une élongation de 10% sans que la plaquette 16 soit affectée avec une inclinaison de 30° des boucles extrêmes de la languette 12. Des techniques de fabrication de supports avec des éléments de liaison pour attaches auto agrippantes sont par exemple décrites dans le brevet FR 1 188 714 déposé le 16 décembre 1957.

Suivant son mode de construction, l'accrochage fourni par l'attache auto agrippante peut-être réversible. On peut donc récupérer l'objet fonctionnel après sa mise en place, soit après une période de fonctionnement relativement brève à des fins d'exploitation de données enregistrées dans l'objet fonctionnel, notamment s'il est attaché à l'extérieur du flanc, soit à l'occasion d'un démontage du pneumatique ou en fin de vie s'il est à l'intérieur, aux fins d'analyse ou de réutilisation le cas échéant. Il est également possible de rendre la fixation de l'objet inamovible une fois mis en place dans le pneumatique. On peut à cet égard utiliser des attaches auto agrippantes avec des attaches non réversibles, c'est à dire dans lesquelles l'engagement d'éléments mâles tels que des hameçons dans des éléments femelles est irréversible par construction. On peut aussi utiliser des attaches dont les boucles ou les crochets sont fabriqués avec des fils synthétiques dont on modifie les caractéristiques physiques après l'accrochage. L'attache reste alors amovible jusqu'au moment où l'on applique localement par exemple un apport de chaleur propre à élever la température des crochets pour les faire se rétracter d'une manière qui ne leur permette plus de se désengager des boucles sans détruire l'attache.

Bien entendu, l'invention n'est pas limitée aux exemples décrits et représentés et diverses modifications peuvent y être apportées sans sortir du cadre défini par les revendications annexées.

## Revendications

1. Pneumatique comportant une enveloppe dont la paroi est propre à supporter une pression de service interne, après que l'enveloppe a été montée sur une roue de véhicule, et une attache auto agrippante pour fixer un objet dans une face de cette paroi, cette attache comprenant une première partie solidaire de la paroi et capable de se déformer avec elle, une deuxième partie propre à être couplée mécaniquement à la première partie par des éléments de liaison lorsqu'elle est appliquée contre elle, de façon à maintenir l'objet en position de service dans la paroi du pneumatique, **caractérisé en ce que** :
- la première partie (12) d'attache (10) a une caractéristique de déformabilité propre telle que les contraintes développées dans cette attache en réaction aux déformations de la paroi de l'enveloppe (20) à son interface avec ladite attache soient sensiblement inférieures aux contraintes qui provoquent lesdites déformations de cette paroi,
- en sorte que la présence de cette première partie d'attache n'entrave pas sensiblement les déformations de la paroi, et
- qu'en position de couplage lesdits éléments de liaison (13, 18) laissent une faculté de débattement mécanique entre la première et la deuxième partie d'attache (12, 16) qui limite la transmission desdites sollicitations à la deuxième partie de l'attache et à l'objet (27) dans sa position de service.

2. Pneumatique selon la revendication 1, **caractérisé en ce que** l'objet (27) est solidaire de la deuxième partie (16) de l'attache.

3. Pneumatique selon l'une des revendications 1 et 2, **caractérisé en ce que** les éléments de liaison (13, 18) comprennent des éléments filaires ou tiges flexibles qui en position de couplage relient une face de la première partie (12) à une face correspondante de la deuxième partie (16) d'attache (10) et présentent au moins une caractéristique physique ou géométrique propre à fournir ladite faculté de débattement, tangentiellement et/ou radialement, entre les dites faces.

4. Pneumatique selon la revendication 3, **caractérisé en ce que** ladite faculté de débattement est fournie par le réglage de la longueur desdits éléments de liaison (13, 18).

5. Pneumatique selon l'une des revendications 3 et 4, **caractérisé en ce que** la deuxième partie (16) d'attache (10) comporte des éléments de liaison propres à s'accrocher à des éléments de liaison correspondants dudit support mince (12) lorsque leurs faces correspondantes sont appliquées l'une contre l'autre.

6. Pneumatique selon la revendication 5, **caractérisé en ce que** les éléments de liaison comportent des éléments d'accouplement mâles (18) tels que crochets, harpons, ou champignons faisant saillie à la surface d'une desdites parties d'attache et des éléments d'accouplement femelle (13) dans la face correspondante de l'autre partie d'attache.

7. Pneumatique selon l'une quelconque des revendications précédentes, **caractérisé en ce que** la première partie de l'attache comprend un support mince (12) solidaire de la paroi de l'enveloppe et possédant une capacité d'allongement structurelle au moins égale à l'amplitude maximale de la déformation de la paroi de l'enveloppe dont elle est solidaire sous l'action des sollicitations dont elle peut être l'objet.

8. Pneumatique selon la revendication 7, **caractérisé en ce que** la capacité d'allongement structurelle du support mince (12) dans sa dimension correspondant à la direction principale de déformation de la paroi de l'enveloppe dans le secteur de l'attache est au moins égale à 10% et de préférence au moins égale à 30%.

9. Pneumatique selon l'une des revendications 7 et 8, fabriqué selon un processus de fabrication comportant une ou plusieurs phases de conformation de l'ébauche du pneumatique préalablement à la cuisson, **caractérisé en ce que** le support mince (12) a une capacité d'allongement structurelle initiale (en début de fabrication) d'au moins 20 % et de préférence 100% pour accompagner les déformations de la paroi de l'enveloppe (20) pendant la conformation.

10. Pneumatique selon l'une des revendications 7 à 9, **caractérisé en ce que** le module d'élasticité du support mince (12) de l'attache (10) dans la direction principale de déformation de l'enveloppe est inférieur à 3,5 MPa à l'ambiante et 2,5 MPa à 60°C.

11. Pneumatique selon l'une des revendications 7 à 10, **caractérisé en ce que** le support mince comprend une nappe d'éléments élastiques allongés tissés ou non.

12. Pneumatique selon l'une des revendications 7 à 11, **caractérisé en ce que** le support mince comprend une nappe de mailles déformables d'éléments allongés.

13. Pneumatique selon l'une des revendications 7 à 12, **caractérisé en ce que** le support mince (12) comprend une nappe en cote de mailles.

14. Attache auto agrippante mécanique en deux parties pour pneumatique qui comprend une première partie (12, 13) destinée à être rendue solidaire de la paroi d'un pneumatique, une deuxième partie (16, 18) destinée à maintenir un objet en position de service contre la paroi de ce pneumatique et des éléments de liaison filaire propres à coupler mécaniquement la première et la deuxième partie lorsqu'elles sont appliquées en contact l'une avec l'autre, **caractérisée en ce que** les caractéristiques physiques ou géométriques de ces éléments de liaison sont déterminées pour autoriser en position de couplage une faculté de débattement mécanique entre ces deux parties de manière à limiter la transmission des sollicitations en provenance de la paroi du pneumatique qui affectent la première partie vers la deuxième partie et l'objet dans sa position de service et **en ce que** la première partie comprend un support mince (12) capable de se déformer avec la paroi (22) du pneumatique dont elle est destinée à être rendue solidaire sans l'entraver sensiblement pendant le fonctionnement du pneumatique équipé dudit objet fixé à sa paroi.

15. Ebauche de pneumatique en cours de fabrication constituée par la réunion à cru de composants à base de matériaux caoutchouteux pour constituer une paroi d'enveloppe pneumatique dont la fabrication comporte au moins une phase de mise en forme et une phase de vulcanisation pour stabiliser l'ensemble, **caractérisée en ce que** l'un desdits composants comprend un support mince (12), destiné à former une première partie d'une attache du type auto agrippante solidaire du pneumatique, dans lequel sont disposés des éléments de liaison (13, 18) propres à effectuer à l'issue de la fabrication le couplage entre ladite première partie (12) et une deuxième partie d'attache (16) initialement non solidaire du pneumatique, ledit support mince (12) étant posé à l'état cru dans ladite paroi (22) et possédant une capacité structurelle d'élongation initiale suffisante pour pouvoir se déformer avec elle sans l'entraver sensiblement ni se rompre, au cours des étapes de fabrication et de préférence au moins égale à 100%.

## Patentansprüche

1. Luftreifen, der einen Mantel, dessen Wand einen inneren Betriebsdruck aushalten kann, nachdem der Mantel auf ein Fahrzeugrad montiert wurde, und eine selbsthaftende Halterung aufweist, um einen Gegenstand in einer Seite dieser Wand zu befestigen, wobei diese Halterung einen ersten Teil, der fest mit der Wand verbunden ist und sich mit ihr verformen kann, und einen zweiten Teil enthält, der durch Verbindungselemente mechanisch mit dem ersten gekoppelt werden kann, wenn er gegen ihn gedrückt wird, um den Gegenstand in der Betriebsstellung in der Wand des Luftreifens zu halten, **dadurch gekennzeichnet, dass**:
- der erste Teil (12) der Halterung (10) ein derartiges Eigenverformbarkeitsmerkmal hat, dass die in dieser Halterung als Reaktion auf die Verformungen der Wand des Mantels (20) an ihrer Schnittstelle mit der Halterung entwickelten Beanspruchungen deutlich geringer sind als die Beanspruchungen, die die Verformungen der Wand verursachen,
- so dass das Vorhandensein dieses ersten Halterungsteils die Verformungen der Wand nicht wesentlich beeinträchtigen, und
- dass in der Kopplungsstellung die Verbindungselemente (13, 18) eine mechanische Federungsfähigkeit zwischen dem ersten und dem zweiten Halterungsteil (12, 16) übrig lassen, die die Übertragung der Beanspruchungen auf den zweiten Halterungsteil und auf den Gegenstand (27) in seiner Betriebsstellung begrenzt.

2. Luftreifen nach Anspruch 1, **dadurch gekennzeichnet, dass** der Gegenstand (27) fest mit dem zweiten Teil (16) der Halterung verbunden ist.

3. Luftreifen nach einem der Ansprüche 1 und 2, **dadurch gekennzeichnet, dass** die Verbindungselemente (13, 18) Drahtelemente oder biegsame Stangen enthalten, die in der Kopplungsstellung eine Seite des ersten Teils (12) mit einer entsprechenden Seite des zweiten Teils (16) der Halterung (10) verbinden, und mindestens ein physikalisches oder geometrisches Merkmal haben, das geeignet ist, um die tangentiale und/oder radiale Federungsfähigkeit zwischen den Seiten zu liefern.

4. Luftreifen nach Anspruch 3, **dadurch gekennzeichnet, dass** die Federungsfähigkeit durch die Regelung der Länge der Verbindungselemente (13, 18) geliefert wird.

5. Luftreifen nach einem der Ansprüche 3 und 4, **dadurch gekennzeichnet, dass** der zweite Teil (16) der Halterung (10) Verbindungselemente aufweist, die geeignet sind, um sich an entsprechenden Verbindungselementen des dünnen Trägers (12) einzuhaken, wenn ihre entsprechenden Seiten gegeneinander gedrückt werden.

6. Luftreifen nach Anspruch 5, **dadurch gekennzeichnet, dass** die Verbindungselemente Einsteckkopplungelemente (18) wie Haken, Widerhaken oder Pilzköpfe, die an der Fläche eines der Halterungsteile vorstehen, und Aufnahmekopplungselemente (13) in der entsprechenden Seite des anderen Halterungsteils aufweisen.

7. Luftreifen nach einem der vorhergehenden Ansprüche, **dadurch gekennzeichnet, dass** der erste Halterungsteil einen dünnen Träger (12) enthält, der fest mit der Wand des Mantels verbunden ist und eine Fähigkeit der strukturellen Dehnung besitzt, die mindestens gleich der maximalen Amplitude der Verformung der Wand des Mantels, mit der er fest verbunden ist, unter der Einwirkung der Beanspruchungen ist, denen sie ausgesetzt sein kann.

8. Luftreifen nach Anspruch 7, **dadurch gekennzeichnet, dass** die strukturelle Dehnungsfähigkeit des dünnen Trägers (12) in seiner Abmessung entsprechend der Hauptrichtung der Verformung der Wand des Mantels im Bereich der Halterung mindestens gleich 10% und vorzugsweise mindestens gleich 30% ist.

9. Luftreifen nach einem der Ansprüche 7 und 8, der gemäß einem Fertigungsprozess gefertigt wird, welcher eine oder mehrere Phasen der Anpassung des Rohlings des Luftreifens vor dem Brennen aufweist, **dadurch gekennzeichnet, dass** der dünne Träger (12) eine strukturelle Anfangsdehnungsfähigkeit (zu Beginn der Fertigung) von mindestens 20% und vorzugsweise 100% hat, um die Verformungen der Wand des Mantels (20) während der Anpassung zu begleiten.

10. Luftreifen nach einem der Ansprüche 7 bis 9, **dadurch gekennzeichnet, dass** der Elastizitätsmodul des dünnen Trägers (12) der Halterung (10) in der Hauptverformungsrichtung des Mantels geringer als 3,5 MPa bei Umgebungstemperatur und als 2,5 MPa bei 60°C ist.

11. Luftreifen nach einem der Ansprüche 7 bis 10, **dadurch gekennzeichnet, dass** der dünne Träger eine Lage von gewebten oder nicht gewebten länglichen elastischen Elementen enthält.

12. Luftreifen nach einem der Ansprüche 7 bis 11, **dadurch gekennzeichnet, dass** der dünne Träger eine Lage von verformbaren Maschen länglicher Elemente enthält.

13. Luftreifen nach einem der Ansprüche 7 bis 12, **dadurch gekennzeichnet, dass** der dünne Träger (12) eine Maschengeflechtlage enthält.

14. Zweiteilige mechanische selbsthaftende Halterung für einen Luftreifen, die einen ersten Teil (12, 13), der dazu bestimmt ist, fest mit der Wand eines Luftreifens verbunden zu werden, einen zweiten Teil (16, 18), der dazu bestimmt ist, einen Gegenstand in Betriebsstellung gegen die Wand dieses Luftreifens zu halten, und drahtförmige Verbindungselemente enthält, die geeignet sind, um den ersten und den zweiten Teil mechanisch zu koppeln, wenn sie gegeneinander in Kontakt gedrückt werden, **dadurch gekennzeichnet, dass** die physikalischen oder geometrischen Merkmale dieser Verbindungselemente festgelegt werden, um in der Kopplungsstellung eine mechanische Federungsfähigkeit zwischen diesen zwei Teilen zu erlauben, um die Übertragung der von der Wand des Luftreifens kommenden Beanspruchungen, die den ersten Teil zum zweiten Teil und den Gegenstand in seiner Betriebsstellung belasten, zu begrenzen, und dass der erste Teil einen dünnen Träger (12) enthält, der sich mit der Wand (22) des Luftreifens verformen kann, mit der er fest verbunden werden soll, ohne sie merklich während des Betriebs des mit dem an seiner Wand befestigten Gegenstand ausgestatteten Luftreifens zu beeinträchtigen.

15. Luftreifenrohling während der Fertigung, der aus der Vereinigung im Rohzustand von Komponenten auf der Basis von Kautschukmaterialien besteht, um eine Luftreifen-Mantelwand zu bilden, deren Fertigung mindestens eine Formgebungsphase und eine Vulkanisierphase aufweist, um die Einheit zu stabilisieren, **dadurch gekennzeichnet, dass** eine der Komponenten einen dünnen Träger (12) enthält, der dazu bestimmt ist, einen fest mit dem Luftreifen verbundenen ersten Teil einer Halterung vom selbsthaftenden Typ zu formen, in dem Verbindungselemente (13, 18) angeordnet sind, die nach der Fertigung die Kopplung zwischen dem ersten Teil (12) und einem zweiten Halterungsteil (16) durchführen können, der ursprünglich nicht fest mit dem Luftreifen verbunden ist, wobei der dünne Träger (12) im Rohzustand in der Wand (22) angeordnet wird und eine ausreichende ursprüngliche strukturelle Dehnungsfähigkeit, um sich mit ihr verformen zu können, ohne sie während der Fertigungsschritte merklich zu beeinträchtigen oder zu zerbrechen, und vorzugsweise mindestens gleich 100% besitzt.

## Claims

1. Tyre comprising a casing whose wall is suitable for containing an internal service pressure, after the casing has been mounted on a vehicle wheel, and a touch-close fastener for attaching an object in one face of this wall, this fastener comprising a first part fixed to the wall and capable of deforming with the wall, and a second part suitable for joining mechanically to the first part by connection elements when the second part is placed against it, in such a way as to hold the object in its service position in the wall of the tyre, said tyre being **characterized in that**:
• the first part (12) of the fastener (10) has a property of inherent deformability such that the stresses developed in this fastener in reaction to the deformations of the wall of the casing (20) at its interface with said fastener are substantially less than the stresses which produce said deformations in this wall,
• in such a way that the presence of this first fastener part does not significantly hinder the deformations of the wall, and
• **in that** in the joined position said connection elements (13, 18) leave a mechanical looseness between the first and second fastener parts (12, 16) that limits the transmission of said stresses to the second part of the fastener and to the object (27) in its service position.

2. Tyre according to Claim 1, **characterized in that** the object (27) is fixed to the second part (16) of the fastener.

3. Tyre according to either of Claims 1 and 2, **characterized in that** the connection elements (13, 18) comprise thread elements or flexible pins which in the joined position connect one face of the first part (12) to a corresponding face of the second part (16) of the fastener (10) and have at least one physical or geometrical characteristic such as to provide said looseness, tangentially and/or radially, between said faces.

4. Tyre according to Claim 3, **characterized in that** said looseness is provided by the adjustment of the length of said connection elements (13, 18).

5. Tyre according to either of Claims 3 and 4, **characterized in that** the second part (16) of the fastener (10) comprises connection elements suitable for latching onto corresponding connection elements on said thin backing (12) when their corresponding faces are brought together.

6. Tyre according to Claim 5, **characterized in that** the connection elements comprise male coupling elements (18) such as hooks, barbs or mushrooms projecting from the surface of one of said fastener parts and female coupling elements (13) in the corresponding face of the other fastener part.

7. Tyre according to any one of the preceding claims, **characterized in that** the first part of the fastener comprises a thin backing (12) fixed to the wall of the casing and having a structural elongation capacity greater than or equal to the maximum amplitude of the deformation of the wall of the casing to which it is fixed when subjected to the stresses which may be applied to it.

8. Tyre according to Claim 7, **characterized in that** the structural elongation capacity of the thin backing (12) in its dimension corresponding to the main direction of deformation of the wall of the casing in the sector of the fastener is greater than or equal to 10% and preferably greater than or equal to 30%.

9. Tyre according to one of Claims 7 and 8, produced by a manufacturing process comprising one or more stages of shaping the green tyre prior to curing, **characterized in that** the thin backing (12) has an initial structural elongation capacity (at the start of manufacture) of at least 20% and preferably 100% to reproduce the deformations of the wall of the casing (20) during the shaping.

10. Tyre according to one of Claims 7 to 9, **characterized in that** the modulus of elasticity of the thin backing (12) of the fastener (10) in the main direction of deformation of the casing is less than 3.5 MPa at room temperature and 2.5 MPa at 60°C.

11. Tyre according to one of Claims 7 to 10, **characterized in that** the thin backing comprises a ply of woven or nonwoven elongate elastic elements.

12. Tyre according to one of Claims 7 to 11, **characterized in that** the thin backing comprises a ply of deformable meshes of elongate elements.

13. Tyre according to one of Claims 7 to 12, **characterized in that** the thin backing (12) comprises a chainmail ply.

14. Two-part mechanical touch-close fastener for a tyre that comprises a first part (12, 13) designed to be fixed to the wall of a tyre, a second part (16, 18) designed to keep an object in the service position against the wall of this tyre, and filamentary connection elements suitable for mechanically joining together the first and second parts when these are placed in contact with each other, said fastener being **characterized in that** the physical or geometrical characteristics of these connection elements are such as to allow, in the joined position, a mechanical looseness between these two parts in such a way as to limit the transmission of stresses coming from the tyre wall and affecting the first part to the second part and the object in its service position and **in that** the first part comprises a thin backing (12) capable of deforming with the wall (22) of the tyre to which it is fixed without hindering it significantly during the operation of the tyre equipped with said object attached to its wall.

15. Green tyre in the course of manufacture, formed by the bringing together in the green state of components based on rubbery materials to form a tyre casing wall whose manufacture comprises, as a minimum, a shaping stage and a vulcanizing stage to stabilize the whole, said green tyre being **characterized in that** one of said components comprises a thin backing (12), designed to form a first part of a touch-close type fastener fixed to the tyre, in which there are connection elements (13, 18) suitable for providing, at the end of manufacture, a join between said first part (12) and a second part (16) of the fastener, which is initially not fixed to the tyre, said thin backing (12) being placed in the green state in said wall (22) and possessing an initial structural elongation capacity sufficient to enable it to deform with said wall without hindering it significantly or breaking, during the steps of manufacture and preferably greater than or equal to 100%.
